Europäisches Patentamt

European Patent Office

Office européen des brevets

(11) Veröffentlichungsnummer: **0 526 813 B1**

# EUROPÄISCHE PATENTSCHRIFT

(45) Veröffentlichungstag der Patentschrift: **09.11.94**

(21) Anmeldenummer: **92112676.9**

(22) Anmeldetag: **24.07.92**

(51) Int. Cl.5: **C08L 51/04**, C08L 33/08, C08J 5/18

(54) **Ethylenpolymerisate enthaltende Polymerlegierungen für flexible Folien.**

(30) Priorität: **06.08.91 DE 4125981**

(43) Veröffentlichungstag der Anmeldung:
**10.02.93 Patentblatt 93/06**

(45) Bekanntmachung des Hinweises auf die
Patenterteilung:
**09.11.94 Patentblatt 94/45**

(84) Benannte Vertragsstaaten:
**DE FR GB IT SE**

(56) Entgegenhaltungen:
**EP-A- 0 337 187**
**EP-A- 0 370 361**
**EP-A- 0 370 362**
**EP-A- 0 373 415**

(73) Patentinhaber: **BAYER AG**

**D-51368 Leverkusen (DE)**

(72) Erfinder: **Piejko, Karl-Erwin, Dr.**
**Unterscheider Weg 7a**
**W-5060 Bergisch Gladbach (DE)**
Erfinder: **Wunderlich, Hans, Dr.**
**Walter-Flex-Strasse 20**
**W-5090 Leverkusen (DE)**
Erfinder: **Braese, Hans-Eberhard, Dipl.-Ing.**
**Käthe-Kollwitz-Strasse 3**
**W-5000 Köln 71 (DE)**
Erfinder: **Lindner, Christian, Dr.**
**Im Wasserblech 11**
**W-5000 Köln 80 (DE)**

**Beschreibung**

Die Erfindung betrifft Polymerlegierungen aus einem speziellen Pfropfkautschuk auf Acrylatbasis, einem speziellen Acrylatcopolymer und ausgewählten Ethylencopolymerisaten, die sich zur Herstellung von flexiblen alterungsbeständigen Folien mit lederartigem Aussehen eignen und die durch Kalandrieren und Tiefziehen verarbeitet werden können.

Kunststoff-Folien mit lederartigem Aussehen werden beispielsweise zur Innenverkleidung von Kraftfahrzeugen verwendet. Sie werden meist durch Kalandrieren einer Rohfolie und anschließendes Tiefziehen hergestellt. Als Kunststoff verwendet man meist Polyvinylchlorid im Gemisch mit verschiedenen Vinylpolymerisaten und Weichmachern. Diese Folien sind bei hohen Temperaturen nicht vollständig alterungsstabil, enthalten flüchtige, zur Migration neigende Bestandteile und Halogen aufgrund ihres Gehaltes an Polyvinylchlorid. Es besteht daher Bedarf an einem Kunststoffmaterial, das frei ist von Polyvinylchlorid (PVC) und das sich für die Herstellung lederartiger Folien eignet.

Gegenstand dieser Erfindung sind Polymerlegierungen aus

a) 10 bis 60, insbesondere 20 bis 50 Gew.-Teilen eines Pfropfpolymerisates von

a.1) Gemischen aus 20 bis 40 Gew.-% Acrylnitril und 80 bis 60 Gew.-% Styrol, Styrolderivaten, Alkylmethacrylaten und Mischungen daraus oder

a.2) Methylmethacrylat, gegebenenfalls gemischt mit bis zu 30, bevorzugt 2 bis 20 Gew.-% Styrol (oder Derivaten) und/oder 0 bis 30, bevorzugt 2 bis 20 Gew.-% Alkylacrylaten und/oder 0 bis 19, bevorzugt 2 bis 15 Gew.-% Acrylnitril auf

a.3) einen teilchenförmigen vernetzten Alkylacrylatkautschuk mit einem Gelgehalt von größer 50 Gew.-%, der 0 bis 30, bevorzugt 0,5 bis 10 Gew.-% Diene einpolymerisiert enthalten kann, mit einem mittleren Teilchendurchmesser ($d_{50}$) von 80 bis 1.000 nm, wobei die Pfropfpolymerisate (a) Kautschukgehalte von 30 bis 80 Gew.-%, bevorzugt 45 bis 65 Gew.-%, besonders bevorzugt 50 bis 60 Gew.-%, besitzen,

b) 10 bis 50, insbesondere 10 bis 40 Gew.-Teilen eines vernetzten kautschukartigen Copolymerisats aus 5 bis 40, bevorzugt 10 bis 35 Gew.-%, insbesondere 25 bis 35 Gew.-% Acrylnitril, Styrol, Alkylmethacrylat oder deren Mischungen und 95 bis 60, bevorzugt 90 bis 65 Gew.-%, insbesondere 75 bis 65 Gew.-% Alkylacrylat, mit einem Gelgehalt von 20 bis 99 Gew.-% und einem mittleren Teilchendurchmesser ($d_{50}$) von 100 bis 600 nm, insbesondere von 100 bis 300 nm,

c) gegebenenfalls 5 bis 40, bevorzugt 10 bis 30 Gew.-Teilen Vinylpolymerisat, d.h. eines unvernetzten Polymerisates von Styrolen, Acrylnitril, Methacrylnitril, Estern der (Meth)acrylsäure oder Mischungen dieser Monomere mit Staudinger-Indices [$\eta$] (in Dimethylformamid bei 23 °C gemessen) von 0,3 bis 1,5 dl/g und

d) 1 bis 40 Gew.-Teilen, insbesondere 2 bis 30, bevorzugt 4 bis 20 Gew.-Teilen eines Ethylen-Vinylacetat-Copolymerisates mit Vinylacetatgehalten von 25 bis 75 Gew.-%, insbesondere 50 bis 70 Gew.-%.

Die aus den erfindungsgemäßen Legierungen hergestellten Folien sind auch bei hohen Temperaturen alterungsstabil; sie weisen eine außergewöhnlich günstige niedrige Schmelzviskosität auf - ausgedrückt beispielsweise im sogenannten MVI-, so daß die Verarbeitungsgeschwindigkeiten während der thermoplastischen Verarbeitung erhöht sind; durch diese vorteilhaften rheologischen Eigenschaften ist die Neigung zur Störungen während der Folienherstellung reduziert. Die mechanischen Eigenschaften der Folien, wie Zugfestigkeit, Reißdehnung sind trotz des günstigen Schmelzflußes nicht beeinträchtigt. Je nach Menge der Ethylencopolymerisate d) ist die Schmelzviskosität der Formmassen in weiten Bereichen zu variieren, ohne Verschlechterung relevanter anwendungstechnischer Eigenschaften der daraus hergestellten Folien.

Pfropfpolymerisate a) im Sinne der Erfindung sind im allgemeinen Emulsionspolymerisate mit Teilchenstruktur. Sie bestehen aus teilchenförmigen Alkylacrylatkautschuken mit einem Gelgehalt von größer 50 Gew.-%, bevorzugt 70 bis 99 Gew.-% und mittleren Teilchendurchmessern ($d_{50}$) von 80 bis 1.000 nm als Pfropfgrundlage (a.3) und darauf pfropfpolymerisierten Monomeren, wie Alkylacrylaten, Alkylmethacrylaten, Styrolen, wie Styrol, $\alpha$-Methylstyrol, p-Methylstyrol, Acrylnitril oder deren Mischungen (a.1 und a.2).

Die Alkylacrylatkautschuke werden durch vernetzende Copolymerisation von bevorzugt $C_2$-$C_8$-Alkylacrylaten und gegebenenfalls bis zu 20 Gew.-% Comonomeren, wie Styrol, Methylmethacrylat, Vinylmethylether und/oder Acrylnitril, sowie bis zu 4 Gew.-% polyfunktionellen Vinyl- und/oder Allylmonomeren, wie Divinylbenzol, Glykol-bis-acrylat, Bis-acrylamid, Phosphorsäuretriallylester, Zitronensäuretriallylester, Triallylcyanurat, Triallylisocyanurat, Allylester von Acrylsäure oder Methacrylsäure, Maleinsäureallylester, insbesondere Triallylcyanurat oder Triallylisocyanurat, hergestellt. Als Pfropfgrundlagen bevorzugte Acrylatkautschuke besitzen eine bimodale Verteilung der mittleren Teilchendurchmesser. Es handelt sich also vorzugsweise um Gemische von zwei teilchenförmigen Kautschuken, wobei der eine einen mittleren Teilchendurchmesser

($d_{50}$) von 150 bis 250 nm (feinteilig) und der andere einen mittleren Teilchendurchmesser ($d_{50}$) von 400 bis 600 nm (grobteilig) besitzt. Das Gewichtsverhältnis des feinteiligen zum grobteiligen Kautschuk beträgt 1:2 bis 2:1. In der Verteilungskurve der mittleren Teilchendurchmesser einer Mischung der beiden Kautschuke, die den gleichen oder verschiedenen chemischen Aufbau haben können, befinden sich also zwei Maxima.

Besonders geeignete grobteilige Kautschuke weisen eine Kern-Mantel-Struktur auf (vgl. DE-OS 3 006 804).

Besonders bevorzugte Pfropfgrundlagen im Sinne der Erfindung zur Herstellung der Pfropfpolymerisate a) sind somit Gemische von größeren Kautschukteilchen mit Kern/Mantel-Struktur und kleineren Kautschukteilchen ohne Kern/Mantel-Struktur. Die zur Pfropfpolymerisation eingesetzten Kautschukteilchen sind vernetzt und besitzen Gelgehalte von 50 bis 99, bevorzugt 70 bis 99 Gew.-%. Zur Herstellung von Komponente a) werden auf die in Emulsion vorliegenden Acrylatkautschuke unter Beibehaltung der Emulsion die Vinylmonomere pfropfpolymerisiert. Bevorzugt werden als Vinylmonomere Styrol und Acrylnitril eingesetzt.

Die Vinylmonomere (a.1 und a.2) werden bevorzugt mit einer Pfropfausbeute größer 40 Gew.-% aufpolymerisiert, d.h. ein großer Teil der Vinylmonomere ist chemisch an den Kautschuk (über kovalente Bindungen) gebunden. Man erhält solch hohe Pfropfausbeuten, wenn man in an sich bekannter Weise mit Redox-Initiatoren arbeitet, bevorzugt mit Kombinationen aus Hydroperoxid und Ascorbinsäure, gegebenenfalls unter Zusatz von geeigneten Schwermetallkationen.

Die Copolymerisate b) im Sinne der Erfindung sind teilvernetzte kautschukartige Copolymerisate auf Basis von Acrylnitril, Styrol, $C_1$-$C_6$-Alkylmethacrylat, insbesondere $C_1$-$C_3$-Alkylmethacrylat, oder deren Mischungen, bevorzugt auf Basis von Acrylnitril und/oder Methylmethacrylat und einem Alkylacrylat, insbesondere $C_3$-$C_8$-Alkylacrylat, sowie 0,05 bis 5 Gew.-%, bezogen auf die im Copolymerisat enthaltenen Monomere, einer polyfunktionellen, copolymerisierbaren Polyvinyl- oder Allylverbindung, vorzugsweise Triallylcyanurat, Triallylisocyanurat, Vinylether von Polyolen, Vinyl-oder Allylester polyfunktioneller Carbonsäuren und Bisacrylamide von Diaminen. Die Copolymerisate b) besitzen Gelgehalte von 20 bis 99 Gew.-%, insbesondere 40 bis 99 Gew.-%, einen Quellungsindex größer 10, bevorzugt 10 bis 100, gemessen in Dimethylformamid bei 23°C und mittlere Teilchendurchmesser ($d_{50}$) von 100 bis 600 nm, insbesondere von 100 bis 300 nm.

Die Copolymerisate b) können in bekannter Weise durch radikalische, wäßrige Emulsionspolymerisation in Gegenwart anionischer, oberflächenaktiver Stoffe im Temperaturbereich von 40 bis 95°C, insbesondere 55 bis 80°C, hergestellt werden.

Vinylpolymerisate c) im Sinne der Erfindung sind harzartige Polymerisate oder Copolymerisate aus Styrolen, wie Styrol, α-Methylstyrol, p-Methylstyrol, Acrylnitril, Methacrylnitril, Estern der (Meth)acrylsäure oder Mischungen aus den genannten Monomeren mit Staudinger-Indices [η] als Maß für das Molekulargewicht (in Dimethylformamid bei 23°C gemessen) von 0,3 bis 1,5 dl/g. Bevorzugt sind Copolymere aus Styrol oder α-Methylstyrol mit Acrylnitril, die gegebenenfalls bis zu 40 Gew.-% Ester der (Meth)acrylsäure, insbesondere Methylmethacrylat oder Butylacrylat, enthalten.

Die Vinylpolymerisate c) werden nach üblichen Verfahren, z.B. radikalischer Polymerisation in Masse, Lösung, Suspension oder Emulsion, bevorzugt durch radikalische Emulsionspolymerisation in Wasser, erhalten.

Die Ethylenpolymerisate d) sind kautschukartige, unvernetzte, also in organischen Lösungsmitteln lösliche Polymere und bestehen aus 75 bis 25 Gew.-% Ethylen und 25 bis 75 Gew.-% Vinylacetat.

Bevorzugt sind Polymerisate d) mit Vinylacetatgehalten von 40 bis 70 Gew.-%. Die Polymerisate werden üblicherweise durch radikalische Emulsions- oder Lösungspolymerisation hergestellt. Die Ethylenpolymerisate d) sind bekannt und sind gebräuchliche Kautschuke oder Bestandteile thermoplastischer Formmassen wie Polyvinylchlorid.

Die erfindungsgemäße Polymerlegierung aus den Komponenten a) bis d) läßt sich beispielsweise wie folgt herstellen:

Fallen die Komponenten a) bis c) als wäßrige Dispersion (Latex) an, so können diese in Mengen entsprechend der gewünschten Feststoffzusammensetzung vermischt und gemeinsam, z.B. zu einem Pulver, aufgearbeitet werden. Das Pulver kann gegebenenfalls zu einem Granulat, unter Zusatz konventioneller Hilfsstoffe, verdichtet werden.

Die Komponente d) wird mit bekannten Aggregaten, wie Schneckenmaschinen, Walzen, Knetern oder Pulvermischern, mit dem Gemisch aus a) bis c) vereinigt.

Die Komponenten a) bis c) können auch einzeln aufgearbeitet und dann mit Komponente d) vermischt werden.

Gelgehalte und Quellungsindices wurden, wenn nicht anders angegeben, in Dimethylformamid bei 23°C ermittelt (vgl. M. Hoffmann et al., Polymeranalytik II, Georg-Thieme-Verlag, Stuttgart, 1977). Die Teilchendurchmesser stellen mittlere Teilchendurchmesser $d_{50}$ dar (siehe dazu "Ultrazentrifugenmessun-

gen", W. Scholtan et al., Kolloidz. und Z. Polymere 250 (1972), S. 783-796).

Pfropfausbeute ist das Gewichtsverhältnis der pfropfpolymerisierten, harzbildenden Monomere zu der Gesamtmenge der eingesetzten harzbildenden Monomere.

Beispiele

Pfropfpolymerisate a

Herstellung der Acrylatkautschuk-Pfropfgrundlage

In einem Reaktor werden vorgelegt:
17.232 Gew.-Teile Wasser und 588 Gew.-Teile eines Polybutadienkautschuklatex mit einem Polymerfeststoffgehalt von 42 Gew.-% und einem mittleren Teilchendurchmesser ($d_{50}$) von 140 nm. Nach Aufheizen auf 63°C gibt man eine Lösung aus 49,2 Gew.-Teilen Kaliumperoxodisulfat und 1.152 Gew.-Teilen Wasser hinzu. Danach werden folgende Mischungen gleichzeitig innerhalb von 5 h bei 63°C in den Reaktor eingespeist.

Lösung 1:　36.000 Gew.-Teile n-Butylacrylat
　　　　　　81,6 Gew.-Teile Triallylcyanurat
Lösung 2:　40.800 Gew.-Teile Wasser
　　　　　　384 Gew.-Teile $C_{14}$-$C_{18}$-Alkylsulfonsäuren-Na-Salz.

Danach läßt man 4 h bei 63°C auspolymerisieren. Es wird eine Emulsion mit einem Polymerfeststoffgehalt von 37 Gew.-% erhalten. Der mittlere Latexteilchendurchmesser ($d_{50}$) beträgt 480 nm. Das Polymerisat besitzt einen Gel-Gehalt von 93 Gew.-%.

Herstellung des Pfropfpolymerisats

In einem Reaktor werden 734 Gew.-Teile Wasser, 4.784 Gew.-Teile Latex der Acrylatkautschuk-Pfropfgrundlage vorgelegt. Es wird 30 Min. mit Stickstoff gespült und auf 70°C erhitzt. Unter Rühren wird die folgende Lösung 1 zugegeben:

Losung 1:　190 Gew.-Teile Wasser
　　　　　　6 Gew.-Teile Kaliumperoxodisulfat
　　　　　　3 Gew.-Teile $C_{14}$-$C_{18}$-Alkylsulfonsäuren-Na-Salz.

Danach werden die Lösungen 2 und 3 gleichzeitig innerhalb 5 h in den Reaktor bei 70°C eingespeist.

Lösung 2:　850 Gew.-Teile Styrol
　　　　　　330 Gew.-Teile Acrylnitril
Lösung 3:　1.500 Gew.-Teile Wasser
　　　　　　20 Gew.-Teile $C_{14}$-$C_{18}$-Alkylsulfonsäuren-Na-Salz.

Man läßt 4 h bei 70°C auspolymerisieren. Es wird eine Emulsion mit einem Polymerfeststoffgehalt von 35 Gew.-% erhalten. Der Kautschukgehalt des Polymerisates beträgt 60 Gew.-%.

Copolymerisate b)

Herstellung des Acrylnitril/n-Butylacrylat-Copolymerisats

In einem Reaktor werden unter Rühren eine Lösung von 2,5 Gew.-Teile Na-Salz von $C_{14}$-$C_{18}$-Alkylsulfonsäuren und 750 Gew.-Teile Wasser vorgelegt. Nach Aufheizen auf 70°C gibt man 70 Gew.-Teile der Monomerlösung A) hinzu und initiiert die Polymerisation durch Zugabe einer Lösung von 3,5 Gew.-Teile Kaliumperoxodisulfat in 50 Gew.-Teile Wasser. Bei 70°C dosiert man den Rest der Lösung A) sowie die Lösung B) gleichmäßig innerhalb von 6 h in den Reaktor ein und polymerisiert innerhalb von 4 h aus. Es wird ein Latex mit einem Polymerfeststoffgehalt von 38 Gew.-%, mit einem mittleren Teilchendurchmesser ($d_{50}$) von 180 nm und einem Gelgehalt (in Dimethylformamid bei 23°C) von 98 Gew.-% erhalten.

Losung A:　1.105 Gew.-Teile n-Butylacrylat
　　　　　　7 Gew.-Teile Triallylcyanurat
　　　　　　474 Gew.-Teile Acrylnitril
Lösung B:　30 Gew.-Teile Na-Salz von $C_{14}$-$C_{18}$-Alkylsulfonsäuren
　　　　　　1.790 Gew.-Teile Wasser.

Vinypolymerisate c)

Herstellung des Styrol-Acrylnitril-Copolymerisats

In einem Reaktor werden eine Lösung von 6 Gew.-Teilen disproportionierter Abietinsäure, 4 Gew.-Teilen 1-normaler Natronlauge in 3.080 Gew.-Teile Wasser vorgelegt, mit Stickstoff gespült und auf 70°C geheizt. Unter Rühren setzt man 200 Gew.-Teile der Lösung A) zu und initiiert die Polymerisation durch Zugabe einer Lösung aus 8 Gew.-Teilen Kaliumperoxodisulfat in 200 Gew.-Teilen Wasser. Bei 70°C dosiert man den Rest der Lösung A) und Lösung B) gleichmäßig innerhalb 5 h in den Reaktor ein.

Man läßt 4 h bei 70°C auspolymerisieren. Es wird eine Emulsion mit einem Polymerfeststoffgehalt von 33 Gew.-% erhalten. Das isolierte Polymerisat besitzt einen Staudinger-Index $[\eta]$ von 0,7 dl/g (in Dimethylformamid bei 23°C).

Lösung A:    1.944 Gew.-Teile Styrol
756 Gew.-Teile Acrylnitril
2,6 Gew.-Teile tert.-Dodecylmercaptan
Lösung B:    54 Gew.-Teile disproportionierte Abietinsäure
40 Gew.-Teile 1-normale Natronlauge
2.050 Gew.-Teile Wasser.

Ethylencopolymerisate d)

Als Ethylencopolymerisate wurde eingesetzt ein Lösungscopolymerisat aus 70 Gew.-% Vinylacetat und 30 Gew.-% Ethylen mit mittleren Molekulargewichten von 200 000 g/Mol.

Polycaprolacton e)
(zu Vergleichszwecken)

Poly-$\epsilon$-caprolacton mit $\eta$rel (gemessen in $CH_2Cl_2$ bei 20° in einer 2 gew.-%igen Lösung) = 3,0.

Herstellung und Eigenschaften der Polymerlegierungen

Zur Herstellung der Polymerlegierungen werden die Latices der Bestandteile a), b) und c) so vermischt, daß die Feststoffanteile die in Tabelle 1 aufgeführten Zusammensetzungen der Polymerisatmischungen ergeben. Die Latexmischungen werden mit 1 Gew.-% (bezogen auf Feststoff) eines phenolischen Stabilisators versetzt und mit wäßriger Magnesiumsulfatlösung koaguliert. Die primär erhaltenen Pulver werden abfiltriert, gewaschen und bei 60°C getrocknet. Die Pulver werden mit Bestandteil d) entsprechend Tabelle 1 und 0,4 Gew.-% Esterwachs auf einem Mischwalzwerk 10 Minuten bei 190°C homogenisiert und bei 200°C zu Prüfkörpern verpreßt. Die Eigenschaften der Prüfkörper und Formmassen sind in Tabelle 2 aufgelistet.

Tabelle 1

| Zusammensetzung der Polymerlegierungen | | | | | |
|---|---|---|---|---|---|
| Versuch Nr. | Bestandteile | | | | |
| | a | b | c | d | e |
| 1 | 45 | 40 | 15 | - | - Vergleich |
| 2 | 42,75 | 38 | 14,25 | 5 | - |
| 3 | 40,5 | 36 | 13,5 | 10 | - |
| 4 | 36 | 32 | 12 | 20 | - |
| 5 | 31,5 | 28 | 10,5 | 30 | - |
| 6 | 27 | 24 | 9 | 40 | - |
| 7 | 22,5 | 20 | 5 | 50 | - Vergleich |
| 8 | 42,75 | 38 | 14,25 | - | 5 Vergleich |

| Prüfmethoden: | |
|---|---|
| Zugfestigkeit: | DIN 53 455 |
| Dehnung: | DIN 53 455 |
| Shore-Härte: | DIN 53 505/Typ A/D |
| Schmelzviskosität (MVI) : | DIN 53 735 (220°/21,6 kg) |

Tabelle 2: Eigenschaften von Formmassen

| Versuch Nr. | MVI | Zugfestigkeit [MPa] | Dehnung [%] | Shore-Härte A/B | Vicat Verfahren A [°C] |
|---|---|---|---|---|---|
| 1 (Vergleich) | 0,5 | 18 | 210 | 95/39 | 84 |
| 2 | 6 | 15 | 200 | 95/37 | 71 |
| 3 | 15 | 14,3 | 210 | 92/35 | 64 |
| 4 | 58 | 11,8 | 200 | 91/29 | 47 |
| 5 | 171 | 7 | 160 | 84/23 | 40 |
| 6 | 449 | 5 | 160 | 77/17 | 36 |
| 7 (Vergleich) | zu weich | | | | |
| 8 (Vergleich) | 8 | 16 | 220 | 94/39 | 57 |

Tabelle 2 zeigt, daß der Zusatz der Komponente d) zu a), b) und c) bereits in kleinen Anteilen den Schmelzviskositätsindex erhöht, ohne die anderen Eigenschaften deutlich zu beeinflussen. Ein Zusatz von Polycaprolacton als Weichmacher erhöht zwar auch den Schmelzviskositätsindex, verursacht aber bereits in kleinen Anteilen eine drastische Absenkung der Vicattemperatur (Vergleichsbeispiel 8). In hohen Anteilen (>20 %) bewirkt der Zusatz der Komponente d) neben einer dramatischen Erhöhung des MVI-Wertes eine Weichmachung der Formmassen und deutliche Absenkung der Vicattemperatur. Mit Anteilen an Komponente d) größer 40 % (Vergleichsbeispiel 7: 50 %) sind die Formmassen für Folien-Anwendungen zu weich.

**Patentansprüche**

1. Polymerlegierungen aus
   a) 10 bis 60 Gew.-Teilen eines Pfropfpolymerisates von
   a.1) Gemischen aus 20 bis 40 Gew.-% Acrylnitril und 80 bis 60 Gew.-% Styrol, Styrolderivaten, Alkylmethacrylaten und Mischungen daraus oder
   a.2) Methylmethacrylat, gegebenenfalls gemischt mit 0 bis 30 Gew.-% Styrol (oder Derivaten) und/oder 0 bis 30 Gew.-% Alkylacrylaten und/oder 0 bis 19 Gew.-% Acrylnitril, gepfropft auf
   a.3) einen teilchenförmigen vernetzten Alkylacrylatkautschuk mit einem Gelgehalt von größer 50 Gew.-%, der 0 bis 30 Gew.-% Diene einpolymerisiert enthalten kann, mit einem mittleren Teilchendurchmesser ($d_{50}$) von 80 bis 1.000 nm, wobei die Pfropfpolymerisate (a) Kautschukgehalte von 30 bis 80 Gew.-% besitzen,
   b) 10 bis 50 Gew.-Teilen eines vernetzten kautschukartigen Copolymerisats aus 5 bis 40 Gew.-% Acrylnitril, Styrol, Alkylmethacrylat oder deren Mischungen und 95 bis 60 Gew.-% Alkylacrylat mit einem Gelgehalt von 20 bis 99 Gew.-% und einem mittleren Teilchendurchmesser ($d_{50}$) von 100 bis 600 nm,
   c) gegebenenfalls 5 bis 40 Gew.-Teile eines unvernetzten Polymerisates von Styrolen, Acrylnitril, Methacrylnitril, Estern der (Meth)acrylsäure oder Mischungen dieser Monomere mit Staudinger-Indices [$\eta$] (in Dimethylformamid bei 23 °C gemessen) von 0,3 bis 1,5 dl/g und
   d) 1 bis 40 Gew.-Teile eines Ethylen-Vinylacetat-Copolymerisates mit Vinylacetatgehalten von 25 bis 75 Gew.-%.

2. Verwendung der Polymerlegierung nach Anspruch 1 zur Herstellung von tiefziehbaren, flexiblen Folien.

**Claims**

1. Polymer blends of
   a) 10 to 60 parts by weight of a graft polymer of
   a.1) mixtures of 20 to 40% by weight of acrylonitrile and 80 to 60% by weight of styrene, styrene derivatives, alkyl methacrylates and mixtures thereof or
   a.2) methyl methacrylate, optionally mixed with 0 to 30% by weight of styrene (or derivatives) and/or 0 to 30% by weight of alkyl acrylates and/or 0 to 19% by weight of acrylonitrile on
   a.3) a particulate crosslinked alkyl acrylate rubber with a gel content of > 50% by weight which may contain 0 to 30% by weight of copolymerized dienes and which has an average particle diameter ($d_{50}$) of 80 to 1,000 nm, the graft polymers (a) having rubber contents of 30 to 80% by weight,
   b) 10 to 50 parts by weight of a crosslinked rubber-like copolymer of 5 to 40% by weight of acrylonitrile, styrene, alkyl methacrylate or mixtures thereof and 95 to 60% by weight of alkyl acrylate with a gel content of 20 to 99% by weight and an average particle diameter ($d_{50}$) of 100 to 600 nm,
   c) optionally 5 to 40 parts by weight of vinyl polymer, i.e. an uncrosslinked polymer of styrenes, acrylonitrile, methacrylonitrile, esters of (meth)acrylic acid or mixtures of these monomers having intrinsic viscosities [$\eta$] (as measured in dimethyl formamide at 23 °C) of 0.3 to 1.5 dl/g and
   d) 1 to 40 parts by weight of an ethylene/vinyl acetate copolymer having vinyl acetate contents of 25 to 75% by weight.

2. The use of the polymer blends claimed in claim 1 for the production of thermoformable flexible films.

**Revendications**

1. Alliages de polymères, consistant en :
   a) 10 à 60 parties en poids d'un polymère greffé formé par
   a.1) des mélanges de 20 à 40 % en poids d'acrylonitrile et de 80 à 60 % en poids de styrène, de dérivés du styrène, de méthacrylates d'alkyles et de leurs mélanges, ou

a.2) du méthacrylate de méthyle, éventuellement en mélange avec 0 à 30 % en poids de styrène (ou de dérivés du styrène) et/ou avec 0 à 30 % en poids d'acrylates d'alkyles et/ou 0 à 19 % en poids d'acrylonitrile, greffé sur

a.3) un caoutchouc d'acrylate d'alkyle réticulé, en forme de particules, ayant une teneur en gel supérieure à 50 % en poids, et pouvant comporter 0 à 30 % en poids de diène incorporé par polymérisation, ayant un diamètre particulaire moyen ($d_{50}$) allant de 80 à 1 000 nm, les polymères de greffage ou greffés a) ayant des teneurs en caoutchouc de 30 à 80 % en poids,

b) 10 à 50 parties en poids d'un copolymère caoutchouteux réticulé, formé de 5 à 40 % en poids d'acrylonitrile, de styrène, de méthacrylate d'alkyle ou de leurs mélanges et de 95 à 60 % en poids d'acrylate d'alkyle, ayant une teneur en gel de 20 à 99 % en poids et ayant un diamètre particulaire moyen ($d_{50}$) de 100 à 600 nm,

c) éventuellement 5 à 40 parties en poids d'un polymère non réticulé de styrènes, de l'acrylonitrile, du méthacrylonitrile, d'esters de l'acide (méth)acrylique ou de mélanges de ces monomères, ayant des indices de Staudinger [$\eta$] (mesure effectuée dans du diméthylformamide à 23°C) de 0,3 à 1,5 dl/g, et

d) 1 à 40 parties en poids d'un copolymère d'éthylène/acétate de vinyle ayant des teneurs en acétate de vinyle de 25 à 75 % en poids.

2. Utilisation des alliages de polymères selon la revendication 1, pour la production de feuilles flexibles pouvant subir un étirage profond.